# DEMANDE DE BREVET EUROPEEN

(11) **EP 0 837 585 A1**
(43) Date de publication de la demande: **22.04.1998**
(21) Numéro de dépôt: 97203088.6
(22) Date de dépôt: 07.10.1997
(51) Int. Cl.: H04M 1/23

(54) **Clavier modulable et module pour clavier d'un équipement électronique**

(30) Priorité: 16.10.1996 FR 9612630
(71) Demandeur: PHILIPS ELECTRONICS N.V., 5621 BA Eindhoven (NL)
(72) Inventeur: Vizier, Franck, 75008 Paris (FR)
(74) Mandataire: Chaffraix, Jean

(57) **Abrégé**

L'invention a pour but de proposer un clavier modulable pour équipements électroniques.

Un tel clavier comporte au moins deux modules porteurs de touches distincts. De façon avantageuse, le clavier est en pente et comporte au moins un module amont et un module aval se recouvrant. Pour cela, ils sont avantageusement dotés d'une partie en saillie et d'une partie en creux respectivement, lesdites parties étant destinées à s'emboîter l'une dans l'autre.

Applications: bases téléphoniques notamment.

## Description

L'invention concerne un équipement électronique, notamment un équipement téléphonique, doté d'un clavier.

L'invention concerne également un clavier et un module pour clavier destinés à être utilisés dans un tel équipement.

L'invention a d'importantes applications, notamment dans le domaine de la téléphonie pour la fabrication de bases téléphoniques pour téléphones filaires ou sans fil. Elle s'applique également à des claviers pour ordinateurs.

Un exemple de clavier pour calculette électronique est décrit dans la demande française de brevet d'invention n° 2 457 006. Ce clavier comporte notamment une couche supérieure en une seule partie dans laquelle sont formées des touches.

Lorsque l'on souhaite proposer à l'utilisateur une gamme variée d'équipements, constituée par exemple de différentes versions déclinées à partir d'un équipement de base auquel on ajoute quelques fonctions, il est nécessaire de fabriquer un clavier différent pour chaque équipement final. Ces claviers comportent par exemple un nombre de touches différent, positionnées différemment... Cela a notamment pour conséquence d'augmenter les coûts, et de compliquer la gestion des stocks.

L'invention a notamment pour but de remédier à cet inconvénient.

Pour cela, un équipement électronique selon l'invention et tel que décrit dans le paragraphe introductif est caractérisé en ce que ledit clavier comporte au moins deux modules porteurs de touches distincts.

L'invention permet ainsi d'utiliser un module standard de touches dans tous les équipements d'une gamme, et de compléter le clavier, pour les fonctions additionnelles par un second module distinct.

Dans un mode de réalisation particulièrement avantageux de l'invention, ledit clavier est un clavier en pente et comporte au moins un module amont et un module aval, au moins un module amont recouvrant au moins un module aval.

Ce mode de réalisation présente l'avantage supplémentaire de permettre l'écoulement de liquides le long du clavier. Cette contrainte est très souvent imposée dans les cahiers des charges des constructeurs afin de garantir un certain niveau de qualité aux équipements.

Dans un autre mode de réalisation avantageux, lesdits modules sont respectivement dotés d'une partie en saillie et d'une partie en creux destinées à s'emboîter l'une dans l'autre.

De même, un clavier selon l'invention est caractérisé en ce qu'il comporte au moins deux modules porteurs de touches distincts, et dans un mode de réalisation avantageux, au moins un module amont et module aval, le module amont recouvrant le module aval. Dans un autre mode de réalisation avantageux d'un tel clavier, lesdits modules sont respectivement dotés d'une partie en saillie et d'une partie en creux destinées à s'emboîter l'une dans l'autre.

Enfin, un module selon l'invention est caractérisé en ce qu'il est doté d'au moins une partie en saillie et/ou d'au moins une partie en creux, pour s'emboîter dans au moins une partie de forme complémentaire d'au moins un autre module.

L'invention sera mieux comprise et d'autres détails apparaîtront à la lumière de la description qui va suivre en regard des dessins annexés qui sont donnés à titre d'exemple non limitatif et dans lesquels:
- la figure 1 représente un exemple d'équipement électronique selon l'invention,
- la figure 2 est une vue en perspective éclatée d'un exemple de clavier et d'un exemple de module selon l'invention,
- la figure 3 est une vue schématique d'un autre exemple de clavier selon l'invention.

Dans la suite de la description l'équipement décrit est une base téléphonique pour un équipement téléphonique. L'invention n'est toutefois pas limitée à ce type d'équipement.

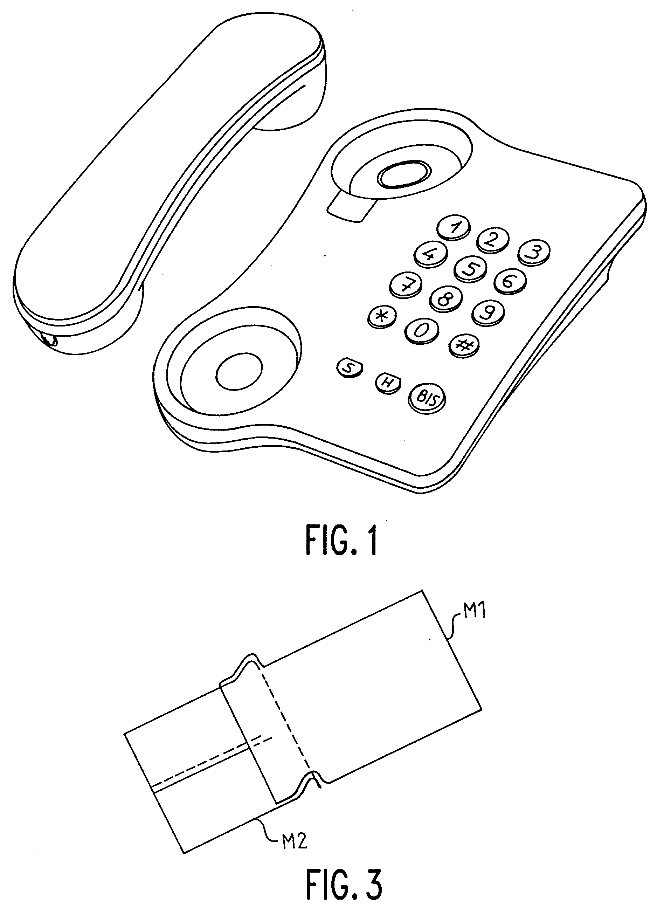

La base téléphonique représentée sur la figure 1 comporte un module de douze touches correspondant aux dix chiffres 0 à 9, à la fonction # et à la fonction *. Un second module a été ajouté pour porter les touches correspondant aux fonctions Haut-parleur (H), Secret (S) et Bis.

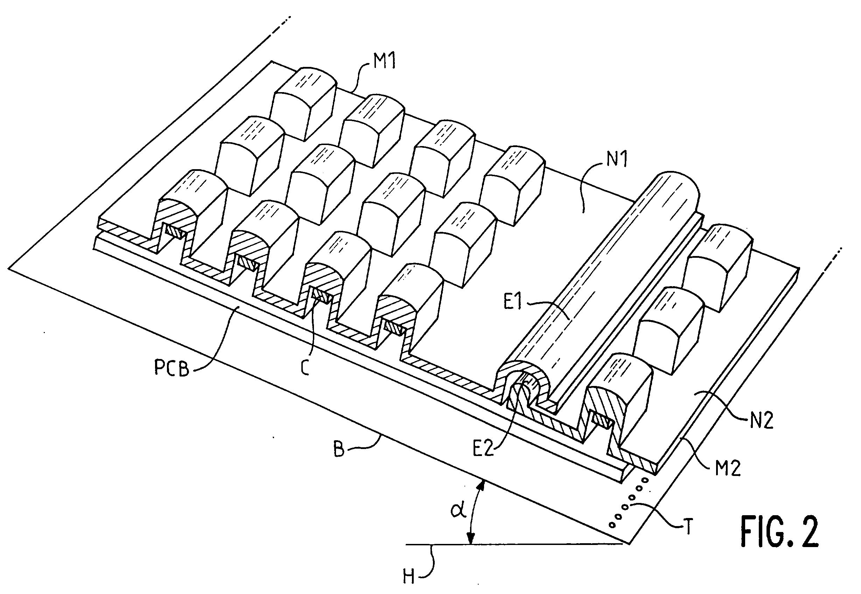

Sur la figure 2 on a représenté une vue en perspective éclatée d'un clavier selon l'invention. Le clavier représenté dans cet exemple est composé de deux modules M1 et M2 comprenant une nappe en élastomère N1 et N2 respectivement dans laquelle sont moulées les touches. Ces grappes de touches en élastomère remplissent une fonction de ressort. Sous ces deux nappes, au niveau de chaque touche, on a collé une pastille de carbone C destinée à réaliser un contact sur un circuit imprimé PCB, lorsque l'utilisateur appuie sur la touche.

Ce clavier est en pente: il fait un angle α avec l'horizontale H, le module M1 étant placé en amont et le module M2 en aval. Le module amont M1 est doté d'une partie en creux E1 et le module aval M2 est doté d'une partie en saillie E2. Ces deux parties sont destinées à s'emboîter de façon à assurer l'écoulement de liquides vers le bas du clavier. En bas du clavier, le module M2 se prolonge au delà du circuit imprimé PCB, et une série de trous T est prévue dans le boîtier B de l'équipement de façon à permettre l'évacuation de l'eau recueillie.

Ce mode de réalisation permet notamment de garantir un bon fonctionnement de l'équipement, lorsqu'un liquide est malencontreusement renversé sur le clavier. Il présente également l'avantage d'améliorer la protection contre les décharges électrostatiques en augmentant la distance à parcourir dans l'air pour atteindre le circuit imprimé PCB. Enfin il est particulièrement simple et bon marché à mettre en oeuvre puisqu'il n'entraîne aucune opération de montage supplémentaire.

Le clavier selon l'invention est disposé dans un unique boîtier : dans l'exemple de la figure 1, il s'agit du boîtier B en matière plastique de la base téléphonique.

L'invention n'est pas limitée au mode de réalisation qui vient d'être décrit à titre d'exemple.

En particulier, d'autres modes de réalisation sont envisageables, basés sur d'autres organisations ou configurations des modules du clavier. A titre d'exemple, on a représenté sur la figure 3, un module amont et un module aval, le module aval étant composé de deux parties qui se recouvrent selon l'axe vertical du clavier.

Par ailleurs le clavier peut comporter un nombre quelconque de modules, et chaque module est susceptible d'être doté d'une ou de plusieurs partie en saillie ou en creux. Et différentes méthodes sont envisageables pour réaliser les touches d'un tel clavier. On a décrit des touches réalisées en élastomère seul; il est également possible d'utiliser des touches réalisées en biinjection élastomère et ABS par exemple, ou d'utiliser des touches en deux parties la nappe d'élastomère étant enfichée dans un cabochon en ABS.

## Revendications

1. Equipement électronique doté d'un clavier, caractérisé en ce que ledit clavier comporte au moins deux modules porteurs de touches distincts.

2. Equipement électronique selon la revendication 1, caractérisé en ce que ledit clavier est un clavier en pente et comporte au moins un module amont et un module aval, au moins un module amont recouvrant au moins un module aval.

3. Equipement électronique selon l'une des revendications 1 ou 2, caractérisé en ce que lesdits modules sont respectivement dotés d'une partie en saillie et d'une partie en creux destinées à s'emboîter l'une dans l'autre.

4. Equipement électronique selon l'une des revendications 1 à 3, caractérisé en ce que lesdits modules sont réalisés en élastomère.

5. Clavier caractérisé en ce qu'il comporte au moins deux modules porteurs de touches distincts.

6. Clavier selon la revendication 5, caractérisé en ce qu'il comporte au moins un module amont et module aval, le module amont recouvrant le module aval.

7. Clavier selon l'une des revendications 5 ou 6, caractérisé en ce que lesdits modules sont respectivement dotés d'une partie en saillie et d'une partie en creux destinées à s'emboîter l'une dans l'autre.

8. Clavier selon l'une des revendications 5 à 7, caractérisé en ce que lesdits modules sont réalisés en élastomère.

9. Module pour clavier, caractérisé en ce qu'il est doté d'au moins une partie en saillie et/ou d'au moins une partie en creux, pour s'emboîter dans au moins une partie de forme complémentaire d'au moins un autre module.

10. Equipement téléphonique doté d'un clavier selon l'une des revendications 5 à 8.
